# EUROPEAN PATENT SPECIFICATION

(11) **EP 0 514 309 B1**
(45) Date of publication and mention of the grant of the patent: **21.01.1998**
(21) Application number: 92500044.0
(22) Date of filing: 23.04.1992
(51) Int. Cl.: G05D 16/06

(54) **Pressure regulator**
Druckregler
Régulateur de pression

(30) Priority: 24.04.1991 ES 9101234 U
(43) Date of publication of application: 19.11.1992
(73) Proprietor: MUNDO STAR, S.L., E-08240 Manresa (ES)
(72) Inventor: Caparros Romera, Antonio, E-08272 Sant Fruitos de Bages (ES)
(74) Representative: Marques Alos, Fernando

(56) References cited:
- EP-A- 0 004 056
- DE-U- 8 504 473
- GB-A- 2 026 135
- US-A- 3 478 776
- US-A- 4 659 291

## Description

The object of the present invention, as expressed in the synopsis of the following description, consists of a PRESSURE REGULATOR of the type used in water distribution systems, as for example those corresponding to a single family home, whose purpose is that of acting as automatic switch for the operation of the electric pump of the installation and, at the same time, regulating the final outlet pressure of the water at the different taps making up the distribution system itself.

At present, different pressure regulating devices for fluids exist on the market, as well as devices to automatically connect an electric pump. However there is no device that unifies these two functions in the same apparatus.

The following documents should be mentioned as examples of the more important applicable state of art:
- US-A-3478776: Corresponding to a pressure regulatory mechanism for fluid dispensing systems.
- EP-A-0004056: Corresponding to a pressurized water supply installation.
- DE-U-8504473: Corresponding to a pressure reduction valve.

The purpose of the first device (US-A-3 478 776) is the automatic maintenance of pressure in a fluid distribution system, independently of the output flow rate. However the selection or adjustment of the outlet pressure is difficult and there is no control over the operation of the electric pump.

The second device (EP-A-0 004 056) corresponds to a traditional pressure regulator, better known as a pressure switch and hydrosphere. In these devices the output pressure of the fluid is regulated by the injection of air into a container which is divided into two compartments by a flexible membrane. These devices have the inconvenience of the difference in pressure on starting and stopping the electric pump and of requiring air pressure to vary the fluid output pressure.

The third device (DE-U-8 504 473) consists of a pressure reduction valve, that acts as an intermediate device between a bottle of chlorine gas and a dosing pump. Its purpose is to maintain a pressure greater than atmospheric pressure in the interior of the chlorine bottle and to supply the gas to the dosing pump at a pressure below atmospheric pressure. This device can not be applied to water distribution systems since its application is only valid for gases contained in bottles under pressure.

On the other hand, the current devices intended for the connection of the electric pump of a water distribution system, only act when the pressure in the system drops below a pre-established limit. This, in itself, invariably indicates that the pressure of the fluid in the system will never be actually constant, but will present variations between 1 and 1.5 Kg of pressure corresponding to the starting and stopping of the electric pump.

The new pressure regulator improves the capacity of varying the water output pressure in the system by turning a simple hand control, without the need of making any other adjustment, to obtain instant pressure changes. Another advantage is its capacity to provide a stable output pressure without any oscillation since the operation of the motor driven pump is carried out by the simple flow of fluid in the distribution system, with no need for a pressure difference in the system to start the pump. However, it also permits activation of the electric pump in the event of the occurrence of a pressure difference, for example, by the defective closure of a tap that implies progressive loss of pressure in the system, although no detectable flow of liquid.

In order to illustrate the explanation so far, the present description is accompanied, forming an integral part thereof, by a series of diagrammatical and simplified drawings representing, in an illustrative and not limited way, an example of the practical possibilities of the invention.

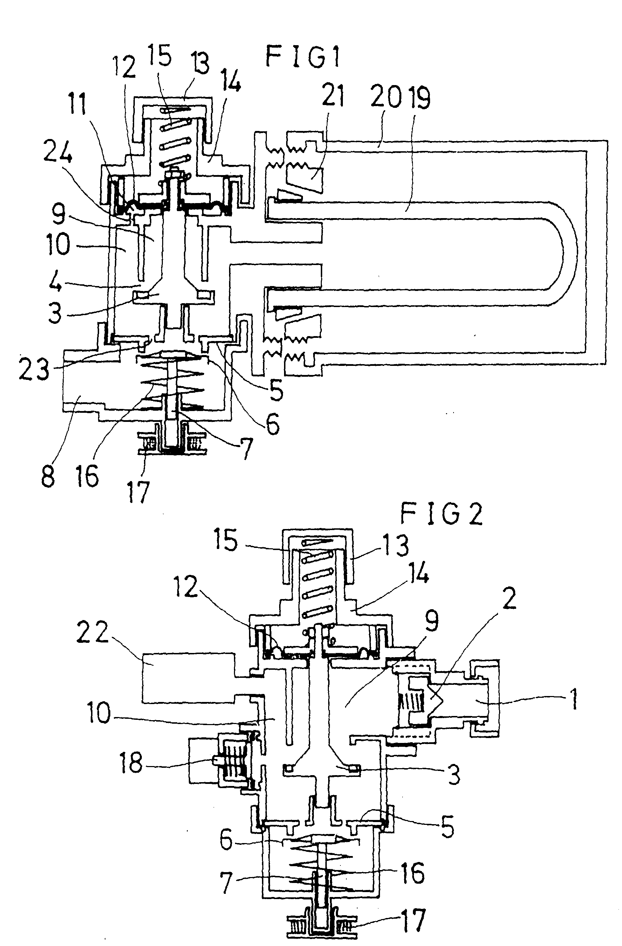

In these drawings, Figure 1 represents a sectional view of the pressure regulator and Figure 2 represents another sectional view perpendicular to the first.

According to the invention, the pressure regulator consists of a water inlet originating from an electric pump (not illustrated) made up of a pipe (1) whose interior contains a rubber piece (2) that closes the pipe (1) through the action of a spring. This pipe (1) empties into a chamber (9) located in the centre of the regulator, crossed by a piston (3) that closes the opening (4) between this chamber (9) and a second chamber (10) fitted with a dividing piece (5) in the lower part, that incorporates the lower guide of the piston (3) as well as some grooves (23) through which the water passes, displacing a valve (6) which is welded to a stainless steel rod (7). This valve (6) is acted on by a spring (16) to maintain it in a closed position when there is no flow of water. The water passes from the first chamber (9) to the second (10), and finally exits through the opening (8) of dividing piece (5) which is connected to the rest of the water supply installation (not illustrated).

In the upper part of the second chamber (10) there is an opening (24) that communicates with a small closed space (11), one of whose walls consists of an elastic membrane (12) that is solidly supported on its lower face by the upper part of piston (3) and on its upper face by the pressure of a spring (15). The whole assembly is closed by a cover (14) that encases the membrane (12) and whose upper part is fitted with screw control (13) whose base is in contact with the upper part of spring (15).

Explanation of the functional operation of the invention:

In the first place, the process for adjusting the output pressure.

When the water enters the first chamber (9), it has a pressure corresponding to the maximum output pressure of the electric pump. The adjustment of the pressure is produced when liquid passes from the first chamber (9) to the second chamber (10) and is based on the variation of the opening (4) of piston (3).

When the water enters the second chamber (10), it passes into the small space (11) limited by the elastic membrane (12) through the connective opening (24). The pressure of the water that reaches this reduced space (11) is equal to that of the second chamber (10) and exercises a force on membrane (12) deforming it proportionally. This distortion of the membrane (12) forces the associated piston (3) to rise. This rise closes the opening (4) between the first and the second chambers (9) and (10). This reduces the pressure in the latter chamber as the flow of water into the distribution system through outlet (8) does not vary.

However, when the flow of outlet water varies, as for example, upon opening a second tap, the pressure in the second chamber (10) drops as does that in the space (11) which is limited by the membrane (12) which is then pressed to a lesser degree and acquires a smaller deformation. This causes piston (3) to descend, opening the gap (4) between the first and second chambers (9) and (10). This increases the flow of water and consequently the pressure in the second chamber (10) until reaching a balance point between the water flow and the water pressure. Since the reaction of the membrane (12) to the pressure changes in the second chamber (10) is instantaneous, the balance point between the water flow and the output pressure is never lost, the oscillations being transferred directly into movements of piston (3).

As the output pressure of the water is directly proportional to the deformation capacity of membrane (12), the selection of a given water output pressure is carried out by modifying this deformation capacity. This modification is carried out through screw control (13), fitted to the lid (14) that covers the membrane and the spring (15) located between the membrane (12) and the interior of the screw control (13). When the control (13) is turned, compressing the spring (15), the membrane (12) reduces its capacity for deformation, automatically varying the balance point mentioned above so that the output pressure of the water increases. On the other hand, if the control (13) is turned so as to release the tension on spring (15), the deformation capacity of the membrane (12) increases and the output pressure is reduced.

In second place, an explanation of the process for starting and stopping the electric pump.

In the rest position, the pressure of the spring (16) associated with the valve (6), located in the interior of the second chamber (10), positions this valve in front of the grooves (23) that allow the passage of water through the dividing partition (5). This pressure is minimum and only sufficient to move valve (6) up to the dividing piece (5) when there is no flow of water in the interior of the pressure regulator.

Upon opening a tap, the water contained in the interior of the pressure regulator begins to circulate. The flow passing through the grooves (23) of the partition piece (5) acts on valve (6) and its associated steel rod (7) whose lower part slides inside a coil (17) fitted to the lower part of the device. This movement produces a signal in the electronic circuit board that, when amplified, triggers the operation of the electric pump. When the tap is closed, the flow of water in the interior of the pressure regulator stops and the spring (16) returns valve (6) to its rest position, so that the steel rod (7) slides out of the coil (17), the signal ceases and the electric pump stops.

When the flow of water is extremely small, as for example due to the drip of a tap, this would not be sufficient to displace valve (6) and rod (7) and so the system would tend to lose pressure. This pressure loss could fall to 0 and still not start the electric pump. To avoid this situation, a pressure operated switch (18) has been fitted to the second chamber (10). This switch is suitably calibrated to generate a signal to the electronic circuit board that starts the electric pump when the pressure in the second chamber (10) reaches a predetermined minimum value. Acting in conjunction with switch (18) is a cylindrical rubber accumulator (19) with a protective plastic sheath (20) and held in place by a ring (21), that is also connected to the second chamber. This device contains a small amount of water so that, in the event of small leaks, pressure is maintained in the system without the operation of the electric pump being constant. This cylindrical rubber accumulator (19) maintains the pressure while it is full of water, without the need for any other external pressure elements.

The presence of the rubber accumulator (19) is optional because the new regulator operates equally well without this element. Its inclusion answers only to improvement of operational conditions, not performance.

Finally, the pressure in the second chamber (10) may be determined on an associated pressure gauge (22).

## Claims

1. **PRESSURE REGULATOR** for water distribution systems, whose purpose is to act as an automatic switch for an operation of an electric pump of an installation and, at the same time, controlling the final output pressure of the water at the different taps making up the distribution system itself, said regulator consisting of a water inlet originating from an electric pump and a water output that is connected to the distribution system, characterized by said water inlet consisting of a pipe (1) whose interior is fitted with a rubber piece (2) that closes off said pipe (1) by means of a spring, a first chamber (9) located in the centre of the regulator into which said pipe is emptying, a piston (3) that closes an opening (4) between said first chamber (9) and a second chamber (10) whose lower part is fitted with a dividing piece (5) that incorporates a lower guide of said piston (3) as well as grooves (23) through which the water passes and displaces a valve (6) that is acted on by a spring (16) to maintain it in a closed position when there is no flow of water, whereas when said valve (6) is operated by a flow of water, the lower end of a stainless steel rod (7) associated with said value enters a coil (17) located in the lower part of the regulator to generate a signal that starts the electric pump through a circuit, the upper part of said second chamber (10) having an opening (24) that communicates with a closed space (11), one of whose walls consists of an elastic membrane (12) whose lower face is solidly supported by the upper part of piston (3) and whose upper face is acted on by the pressure of a spring (15), said regulator being sealed by a cover (14) that encases said membrane (12) and the upper part of said cover being fitted with a screw control (13) whose base is in contact with the upper part of spring (15).

2. **PRESSURE REGULATOR** according to claim 1, characterized in that said second chamber (10) is connected to a pressure switch (18) that, conveniently calibrated, starts the electric pump whenever the pressure in the second chamber (10) reaches a predetermined minimum value, and in that the regulator further comprises a cylindrical rubber water accumulator (19) covered by a plastic sheath (20) and acting in conjunction with said pressure switch (18).

## Patentansprüche

1. Beschreibung: **DRUCKREGLER** - Für Wasserverteilungssysteme wessen Funktion es ist, als automatischer Schalter für das Funktionieren einer elektrischen Pumpe einer Installation und, gleichzeitig, zur Kontrolle der Druckendleistung des Wassers bei verschiedenen Wasserhähnen welche die eigentliche Aufmachung des Verteilungssystem sind, zu dienen. Genannter Regler besteht aus einem Wassereinlauf der aus einer elektrischen Pumpe entsteht und einem Wasserausstoß der dem Verteilungssystem angeschlossen ist. Dieses wird durch einen Wassereinlauf charakterisiert der durch ein Rohr (1) besteht, bei welchem die Innerseite mit Gummi gefüttert ist (2) welcher genanntes Rohr (1) mittels einer Feder schließt. Vorerwähntes Rohr entleert sich in eine erste Kammer (9) die sich in der Mitte des Reglers befindet und in welcher einen Kolben (3) sitzt der eine Öffnung (4) zwischen erwähnter ersten Kammer (9) und zweiter Kammer (10) schließt. Der untere Teil dieser zweiten Kammer ist mit einem Trennungsteil (5) ausgestattet welches mit einer unteren Führung des genannten Kolbens (3) vorgesehen ist, wie auch mit Rinnen (23) durch welche das Wasser läuft und welcher ein Ventil (6) versetzt. Dieses wird durch eine Feder (16) in einer geschlossenen Position gehalten wenn kein Wasserfluß vorhanden ist, aber wenn bei diesem Ventil (6) einen Wasserfluß ist, dann geht das untere End eines rostfreien Stahlrohrs (7) in eine mit dem Ventil zusammenhängende Spule (17) die sich am unteren Teil des Reglers befindet und ein Signal hergibt welches dazu führt, daß die elektrische Pumpe durch den Stromkreis anfangt. Der obere Teile der zweiten Kammer (10) hat eine Öffnung (24) welche mit einem kleinen geschlossenen Raum (11) verbunden ist und dessen Wände aus einer elastischen Membran (12) bestehen, wessen Unterteil solide durch den oberen Teil des Kolbens (3) unterstützt wird. Auf diesem oberen Teil des Kolbens wird der Druck einer Feder (15) angewendet. Der vorerwähnte Regler ist versiegelt durch einen (14) Deckel welche die Membran (12) umschließt. Der obere Teil des Deckels ist mit einer Schraubenkontrolle (13) ausgestattet, wessen Base mit dem oberen Teil der Feder (15) Kontakt hat.

2. Beschreibung: **DRUCKREGLER** - wie bei Beschreibung 1, aber dadurch charakterisiert, daß die zweite Kammer (10) einem gut kalibriertem Druckschalter (18) angeschlossen ist und die elektrische Pumpe in Betrieb setzt immer wenn der Druck der zweiten Kammer (10) einen vorbestimmten Minimalwert erreicht und wobei der Regler weiterhin einen zylindrischen Wassersammler aus Gummi (19) hat der mit einem Plastikgehäuse (20) bedeckt ist und funktioniert durch den Zusammenhang mit vorher genanntem Druckschalter (18).

## Revendications

1. **REGULATEUR DE PRESSION** de type utilisé pour des systèmes de distribution d'eau, dont le but est d'agir en tant qu'interrupteur automatique pour activer la pompe électrique d'une installation et, en même temps, contrôler la pression d'eau à la sortie des divers robinets que comporte ce même système de distribution; ledit régulateur comporte une arrivée d'eau venant d'une pompe électrique et une sortie d'eau branchée sur le système de distribution. Le dispositif est caractérisé par cette arrivée d'eau en provenance d'une pompe électrique, composée par une tuyauterie (1) dont l'intérieur est pourvu d'une pièce en caoutchouc (2) qui ferme la dite tuyauterie (1) par ur ressort. Cette tuyauterie se décharge en premier lieu dans une chambre (9) qui se trouve au centre du régulateur; elle est traversée par un piston (3) qui ferme une ouverture (4) entre cette première chambre (9) et une seconde chambre (10) dont la partie inférieure est pourvue d'une pièce qui la partage (5), laquelle pièce comporte un guidage du piston antérieurement cité (3) et des rainures (23) à travers lesquelles l'eau passe et déplace une soupape (6) mue par un ressort (16) qui la maintient en position fermée lorsqu'il n'y a pas passage d'eau, alors que, lorsque cette soupape (6) est activée par un flux d'eau, l'extrémité inférieure de la tige du régulateur, en acier inoxydable (7) et qui fonctionne avec la soupape, passe vers une bobine (17) située dans la partie inférieure du régulateur pour émettre un signal qui, à travers un circuit met en marche la pompe électrique; la partie supérieure de cette seconde chambre (10) comporte une ouverture (24) qui communique avec un petit espace fermé (11), dont une des parois comporte une membrane élastique (12) dont la partie inférieure est fermement supportée par la partie supérieure du piston (3) et dont la partie supérieure supporte la pression d'un ressort (15). Ce régulateur est fermé par un couvercle (14) qui s'emboîte dans la membrane (12), la partie supérieure de ce couvercle est pourvue d'une commande vissée (13) dont la base est en contact avec la partie supérieure du ressort (15).

2. **REGULATEUR DE PRESSION**, suivant revendication n^{º} 1, caractérisé par le fait que la seconde chambre (10) est branchée à un pressostat (18) qui, dûment calibré, active la pompe électrique chaque fois que la pression atteint, dans la seconde chambre (10) une valeur minimum préalablement déterminée; le régulateur comporte aussi un accumulateur cylindrique en caoutchouc pour eau (19), couvert d'une enveloppe en plastique (20) qui agit de concert avec le pressostat antérieurement mentionné (18).
